# EUROPÄISCHE PATENTSCHRIFT

(11) **EP 2 311 240 B1**
(45) Veröffentlichungstag und Bekanntmachung des Hinweises auf die Patenterteilung: **29.08.2018**
(21) Anmeldenummer: 09775877.5
(22) Anmeldetag: 15.05.2009
(51) Int. Cl.: H04L 29/12, H04L 12/28, H04L 12/751

(54) **VERFAHREN ZUR ENDPUNKT-ADRESSIERUNG SOWIE DAFÜR EINGERICHTETES NETZWERK UND ZUGANGSKNOTEN**
METHOD FOR TERMINAL ADDRESSING AND NETWORK EQUIPPED THEREFOR AND ACCESS NODE
PROCÉDÉ D'ADRESSAGE DE POINTS TERMINAUX AINSI QUE RÉSEAU AMÉNAGÉ POUR CE PROCÉDÉ ET N UD D'ACCÈS

(30) Priorität: 14.07.2008 DE 102008032875
(43) Veröffentlichungstag der Anmeldung: 20.04.2011
(73) Patentinhaber: Deutsche Telekom AG, 53113 Bonn (DE)
(72) Erfinder: HAAG, Thomas, 63110 Rodgau (DE); BUSSER, Michael, 55543 Bad Kreuznach (DE); HAMACHER, Peter, 64380 Rossdorf (DE); SCHWERMER, Ralf, 64380 Rossdorf (DE); FREUDENBERGER, Markus, 64646 Heppenheim (DE); WITSCHURKE, Birgit, 16515 Oranienburg (DE)
(74) Vertreter: 2K Patentanwälte Blasberg Kewitz & Reichel
(86) Internationale Anmeldenummer: PCT/DE2009/000699
(87) Internationale Veröffentlichungsnummer: WO 2010/006569

(56) Entgegenhaltungen:
- EP-A- 1 622 398
- EP-A2- 1 675 304
- WO-A-2008/133934
- US-A- 6 006 272
- SANJAY WADHWA JUNIPER NETWORKS JEROME MOISAND JUNIPER NETWORKS SWAMI SUBRAMANIAN JUNIPER NETWORKS THOMAS HAAG T-SYSTEMS NORBERT VO: "Protocol for Access Node Control Mechanism in Broadband Networks; draft-ietf-ancp-protocol-02.txt" IETF STANDARD-WORKING-DRAFT, INTERNET ENGINEERING TASK FORCE, IETF, CH, Bd. ancp, Nr. 2, 19. November 2007 (2007-11-19), XP015053042 ISSN: 0000-0004
- OOGHE ALCATEL-LUCENT N VOIGT NOKIA SIEMENS NETWORKS M PLATNIC ECI TELECOM T HAAG T-SYSTEMS S WADHWA JUNIPER NETWORKS S: "Framework and Requirements for an Access Node Control Mechanism in Broadband Multi-Service Networks; draft-ietf-ancp-framework-06.txt" IETF STANDARD-WORKING-DRAFT, INTERNET ENGINEERING TASK FORCE, IETF, CH, Bd. ancp, Nr. 6, 9. Mai 2008 (2008-05-09), XP015055665 ISSN: 0000-0004
- ANONYMOUS ED - ANONYMOUS: "IEEE Standard for Local and metropolitan area networks - Virtual Bridged Local Area Networks Amendment 5: Connectivity Fault Management; IEEE Std 802.1ag - 2007 (Amendment to IEEE Std 802.1Q - 2005 as amended by IEEE Std 802.1ad - 2005 and IEEE Std 802.1ak - 2007)" IEEE STANDARD; [IEEE STANDARD], IEEE, PISCATAWAY, NJ, USA, 1. Januar 2007 (2007-01-01), Seiten 1-260, XP017601839 ISBN: 978-0-7381-5689-7

## Beschreibung

Die Erfindung betrifft ein Verfahren zur Adressierung mindestens eines Endpunktes in einem Netzwerk nach dem Oberbegriff des Anspruchs 1. Außerdem betrifft die Erfindung ein dafür eingerichtetes Netzwerk und einen Zugangsknoten nach dem Oberbegriff eines der nebengeordneten Ansprüche. Insbesondere betrifft die Erfindung eine Endpunkt-Adressierung in einem Netzwerk, das einen Zugangsknoten und einen damit verbindbaren Diensteknoten aufweist, wobei über mindestens eine Schnittstelle des Zugangsknotens der Netzwerkzugang für den mindestens einen Endpunkt hergestellt wird und der Zugangsknoten die Netzwerk-Adressen der angeschlossenen Endpunkte verwaltet.

Die Erfindung soll besonders für Anwendungen in breitbandigen Zugangsnetzen geeignet sein, die den Internetzugang für Teilnehmer-Endgeräte über Netzelemente, wie z.B. DSL-Modem, DSL-Zügangsmultiplexer und Breitband-IP-Zugangsknoten, bereit stellen und das Durchführen von Betriebs- und Wartungsaufgaben (Operation and Maintenance, kurz OAM) effektiv ermöglichen.

Aus dem Stand der Technik sind breitbandige auf Ethernet basierende Zugangsnetze bekannt, bei denen im Rahmen von Betriebs- und Wartungsaufgaben sog. Ethernet-OAM-Nachrichten zwischen Endpunkten (Maintenance Entity Points) und definierten Zwischenpunkten (Maintenance Intermediate Points) übertragen werden.

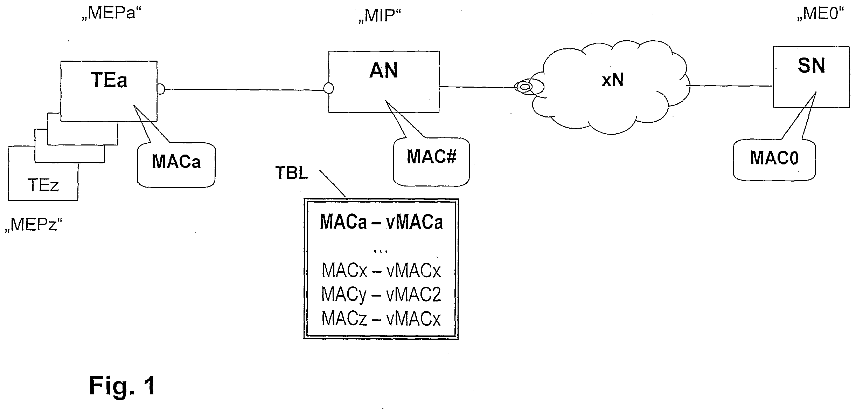

Die Figur 1 zeigt schematisch den Aufbau eines solchen herkömmlichen Netzwerkes NW, das einen Zugangsknoten AN und einen damit verbindbaren Diensteknoten SN aufweist, wobei über mindestens eine Schnittstelle bzw. einen Port PRT des Zugangsknotens AN der Netzwerkzugang für den mindestens einen Endpunkt, hier für mehrere Endpunkte TEa bis TEz, hergestellt wird. Diese Endpunkte können z.B. Teilnehmer-Endgeräte oder Zugangsgeräte, wie z.B. DSL-Modems, sein. Der Zugangsknoten AN ist üblicherweise DSL-Multiplexer-Demultiplexer, der die Netzwerk-Adressen MACa, MACx, MACy, MACz der angeschlossenen Endpunkte TEa bis TEz verwaltet. Die Netzwerk-Adressen sind in der Regel sog. MAC-Adressen (MAC: Media Access Control). Auch die der Zugangspunkt AN selbst wie auch der Dienstknoten SN haben jeweils eine eigene Netzwerk-Adresse, nämlich MAC* bzw. MAC0.

Denn ohne Kenntnis der jeweiligen Netzwerk-Adressen wäre keine Verbindung und Übertragung von Nachrichten unter den beteiligten Knoten möglich. Zwischen dem Zugangsknoten AN und dem Diensteknoten SN, können noch weitere Knoten xN dazwischen geschaltet sein. Üblicherweise wird aber die jeweilige Source MAC-Adresse der Endpunkte TEa bis TEz nicht an die anderen Knoten weitergegeben, sondern deren Kenntnis verbleibt in dem Zugangsknoten AN. Der Zugangsknoten AN wiederum ordnet den ihm bekannten echten Source MAC-Adressen MACa bis MACz dann virtuelle Source MAC-Adressen vMACa, vMACx, vMACy, vMACz zu und gibt nur diese an die anderen Netzelemente weiter. Sofern zumindest die virtuellen Adressen bekannt sind und einer real existierenden Endpunkt-Adresse zugeordnet sind, können auch von der Netzseite her, insbesondere vom Diensteknoten SN, Nachrichten an die einzelnen Endpunkte TEa bis TEz gerichtet werden. Die Form und Kodierung solcher Nachrichten ist in den Standards der ITU-T (Y.1731) und IEEE (802. lag, 802. Iah) definiert. Allerdings befassen sich diese Standards nur mit der Festlegung der PDU Formate (PDU: Protocol Data Unit) und Mechanismen. Es wird insbesondere dort nicht angegeben, wie in einem Ethernet-Netz die Adresse des jeweiligen Endpunkts (sog. OAM Senke) zum Dienstpunkt bzw. Anfangspunkt (sog. OAM Quelle) gelangen könnte. Jedoch kann nur durch die Kenntnis der Netzwerk-Adresse eines Endpunktes (MEP: Maintenance Entity Point) ein entsprechender Nachrichtenfluss, sog. OAM Flow, aufgebaut werden. Zudem ist zu beachten, dass die Netzwerk-Adressen der Endpunkte oftmals nur eine vorbestimmte Gültigkeitsdauer haben, und es somit passieren kann, dass eine Nachricht, die an einen Endpunkt gerichtet ist, mit einer bereits verfallenen Adresse versehen wird.

Aus der US-A-6 006 272 wird ein Verfahren zum Umsetzen von nicht mit dem Internet vereinbarer Adressen eines Heimnetzwerkes für die Internet-Kommunikation über einen Router beschrieben. Ein Bezug zu Betriebs- und Wartungsfunktionen (OAM-Funktionen) in einem öffentlichen Netzwerk wird dort nicht hergestellt.

EP 1 622 398 A1 geht aus von dem an sich bekannten Prinzip der 1:1 MAC Address Translation (kurz MAT) und befasst sich mit einem Umzeichungsverfahren von Source und Destination MAC Adressen. Auch hier fehlt der Bezug zu OAM-Funktionen.

Der Artikel "Protocol for Access Node Control Mechanism in Broadband Networks" von Sanjay Wadhwa et al mit Datum vom 19. Nov. 2007 und erschienen als Entwurfspapier im Rahmen der Standardisierung des IETF ANCP-Protokolls, befasst sich mit diesem besagten Steuerungsprotokoll und behandelt dazu vier Anwendungsfälle (Use Cases), ohne näher Bezug zu Betriebs- und Wartungsfunktionen (OAM-Funktionen) zu nehmen. EP 1 675 304 A2 beschreibt die Umsetzung einer Destination MAC Adresse in eine Multicast MAC Adresse für eine OAM Nachricht in einem Maintenance Intermediate Point, MIP, wenn die Destination MAC Adresse nicht in einer Forwarding Datenbank gefunden wird.

Deshalb ist es Aufgabe der Erfindung, ein Verfahren der eingangs genannten Art sowie ein danach arbeitendes Netzwerk und einen entsprechenden Zugangsknoten so zu verbessern, dass die oben genannten Nachteile vorteilhaft überwunden werden. Insbesondere soll eine sichere und stets durchführbare Nachrichtenübermittlung im Rahmen von Betriebs- und Wartungsaufgaben möglich sein.
Gelöst wird die Aufgabe durch ein Verfahren mit den Merkmalen des Anspruchs 1 sowie durch ein Netzwerk mit den Merkmalen des Anspruchs 5 und einen Zugangsknoten mit den Merkmalen des Anspruchs 10. Insbesondere wird vorgeschlagen, dass zur Adressierung von Nachrichten, die zwischen dem Dienstknoten und dem jeweiligen Endpunkt ausgetauscht werden, von dem Zugangsknoten eine Umsetzungs- bzw. Interworking-Funktion durchführt wird, indem bei einer von dem Diensteknoten kommenden und an den jeweiligen Endpunkt gerichteten OAM - Nachricht geprüft wird, ob für diesen Endpunkt die Netzwerk-Adresse in dem Zugangsknoten bekannt ist, und falls dies nicht der Fall ist, die Nachricht mittels einer Sammeladresse über die Schnittstelle weitergeleitet wird.

Somit wird eine intelligente Funktion zur Umsetzung der Adressierung, nämlich die erfindungsgemässe Interworking - Funktion, eingesetzt, welche für den Fall, dass keine gültige Adresse des jeweiligen Endknotens bekannt ist, eine SammelAdresse (sog. broadcast address) verwendet. Dabei liegt der Erfindung auch die Erkenntnis zu Grunde, dass auch mittels einer solchen allgemeinen Adresse die Nachricht exakt an den Endpunkt weitergeleitet werden kann, da ja der jeweilige Endpunkt über die ihm zugewiesene Schnittstelle (Port) angeschlossen ist. Deshalb kann auch trotz der Verwendung einer solchen Sammel-Adresse die Weiterleitung gezielt an den gewünschten Endpunkt erfolgen.

Zuvor hat der Zugangsknoten AN dem Diensteknoten die (zuletzt) bekannte Netzwerk-Adresse, insbesondere die virtuelle Netzwerk-Adresse, mitgeteilt, wobei vorzugsweise ein Steuerkanal verwendet wurde. Dadurch wurde der Diensteknoten SN befähigt, die Nachricht OAM-MSG bzw. LBM an den mindestens einen Endknoten TEa adressieren zu können. Und es wurde dadurch sichergestellt, dass diese Nachricht zumindest immer bis zur Interworking-Funktion gelangen und von dort sicher an den Endpunkt weitergeleitet werden kann.

Besonders vorteilhafte Ausgestaltungen der Erfindung ergeben sich aus den Unteransprüchen.

Nachfolgend wird die Erfindung im Detail anhand von Ausführungsbeispielen beschrieben, wobei auf die beiliegenden Figuren Bezug genommen wird, die folgendes darstellen:
- Fig. 1: zeigt eine herkömmliche Netzwerk-Struktur;
- Fig. 2a,b: veranschaulichen das erfindungsgemäße Weiterleiten von Adress-Information an einen Diensteknoten;
- Fig. 3a,b: veranschaulichen die erfindungsgemäß vorgeschlagene Interworking-Funktion; und
- Fig. 4: zeigt den Ablauf eines erfindungsgemäßen Verfahrens.

Die Fig. 1 zeigt in schematischer Darstellung den Aufbau des eingangs genannten Netzwerkes NW, das einen breitbandigen Internetzugang für mehrere Endpunkte TEa bis TEz bereit stellt. Dazu wurden bereits eingangs die im wesentlichen beteiligten Netzelemente und deren Funktionen beschrieben. Ein sich ergebendes Problem besteht darin, dass Netzwerk-Adresse für die Endknoten TEa bis TEz oftmals nur sehr kurze Gültigkeitsdauer aufweisen. Dies kann dazu führen, dass insbesondere der Diensteknoten SN keine Nachrichten mehr an die angeschlossenen Endpunkte bzw. Endgeräte senden kann.

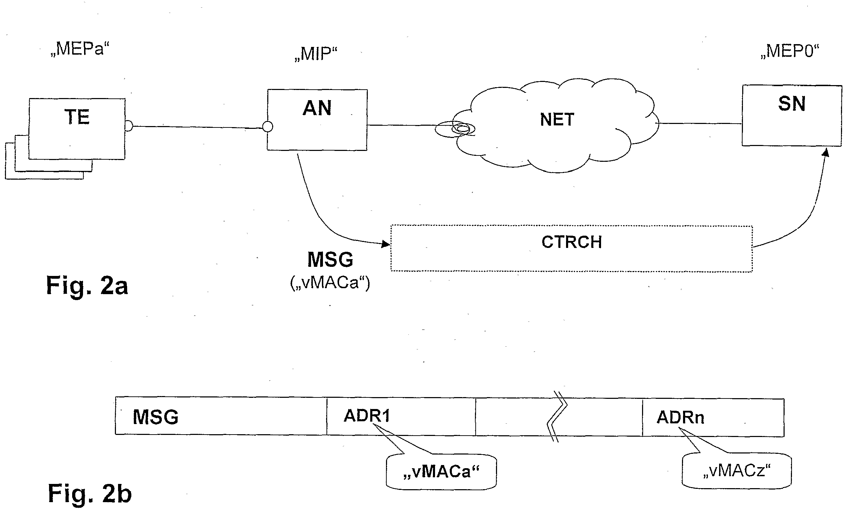

In Fig. 2a ist der erfindungsgemäße Lösungsschritt dargestellt, bei dem der Zugangsknoten AN über einen Steuerkanal CTRCH eine Informations-Nachricht MSG an den Diensteknoten SN sendet, um diesen die Netzwerk-Adressen, vorzugsweise die virtuellen Adressen MACa, ... MACx, MACy, MACz mitzuteilen. Auf dem Steuerkanal CTRCH wird dazu vorzugsweise das derzeit noch in der Standardisierung befindliche ANCP (Access Node Control) -Protokoll der IETF verwendet. Dazu werden neue Datenfelder ADR1 bis ADRn reserviert und mit den jeweiligen Adressen vMACa bis vMACz beschrieben. Der Diensteknoten SN, der hier ein Breitband-Zugangsknoten bzw. Zugangsserver (sog. BRAS: Broadband Remote Access Server) ist, ist dann in der Lage, insbesondere die für Betrieb und Wartung benötigten Nachrichten OAM-MSG an die Endknoten TEa bis TEz zu adressieren.

Es ist somit ein besonderes Merkmal der Erfindung, dass die jeweilige Endpunkt-Adresse des Kundenendgeräts, welche für die Nutzung von Ethernet-OAM-Funktionen vom Dienstknoten SN bzw. BRAS aus zwingend benötigt wird, nicht administrativ (z.B. über ein Managementsystem) bereit gestellt werden muss, sondern durch die hier beschriebenen Mechanismen vom Netzwerk selbst gelernt wird.

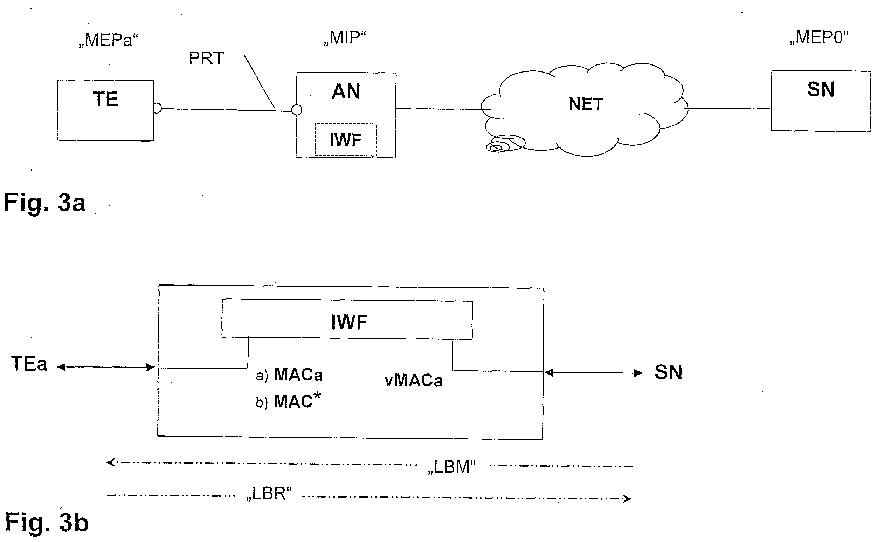

Wie die Figuren 3a,b im Detail darstellen, verfügt der Zugangsknoten AN dazu über eine Interworking-Funktion IWF, die den Austausch der Nachrichten OAM-MSG zwischen dem Diensteknoten SN und jeweiligem Endpunkt TEa ermöglicht.

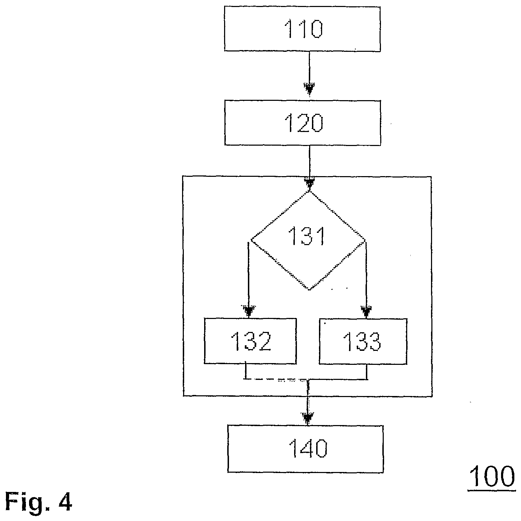

Anhand der Figuren 3a,b sowie der Figur 4 wird das erfindungsgemäße Verfahren 100 nun hier näher beschrieben:
In einem ersten Schritt 110 erlernt der Zugangsknoten AN die aktuellen Netzwerk-Adressen der angeschlossenen Endgeräte. Der Vorgang des Lernens der jeweiligen Endpunkt-Adresse wird durch den Kunden bzw. Benutzer selbst ausgelöst, indem dieser sein Endgerät an das Netzwerk NW bzw. den Zugangsknoten AN anschließt. Er wird nicht vom Netzbetreiber durch Konfiguration o. ä. ausgelöst.

Es handelt sich also um einen automatisch ablaufenden Prozess, der es ermöglicht, die Endpunkt-Adressen in einem "Carrier Class" Ethernet Netzwerk zu lernen, und damit Ethernet OAM Funktionen nutzbar zu machen.

Im breitbandigen Zugangsknoten AN sind je DSL Port MAC Adressen hinterlegt. Diese MAC Adressen werden nach einer festgelegten Regel gebildet, die eineindeutig für die Bezugsdomäne sind. Es können je DSL Port n vMAC Adressen (z.B. 1≤n≤64) gebildet werden. Das ist aber abhängig von der Anzahl der anzuschließenden Endgeräte TE. Die Anzahl der Adressen kann per Konfiguration bestimmt werden.

Nach Synchronisierung der DSL Linien lernt der breitbandige Zugangsknoten AN die Endpunkt-Adressen der Kundengeräte der Verbindung zwischen Zugangsknoten AN und dem jeweiligen Kundenendgerät, z.B. TEa. Zu diesem Zeitpunkt erfolgt im Zugangsknoten AN vorzugsweise auch die Zuweisung einer virtuellen Endpunkt-Adresse, wie z.B. die vMACa. Somit kennt der Zugangsknoten AN die jeweils echte Endpunkt-Adresse, also z.B. die MACa, wie auch die zugehörige virtuelle Endpunkt-Adresse vMACa des Kundenendgerätes TEa.

Der zu Beginn durchgeführte Schritt 110 wird durch den Kunden initiiert, indem dieser sein Endgerät einschaltet bzw. aktiviert. Diese Aktivierung hat den Aufbau der DSL-Strecke zum Zugangsknoten AN zur Folge.

Nachdem zwischen dem Zugangsknoten AN und Kundenendgerät, z.B. TEa, alle Parameter verhandelt und die Übertragungsstrecke aufgebaut ist, sendet der Zugangsknoten AN dann in einem Schritt 120 über den Steuerkanal CTRCH gemäß dem modifizierten Protokoll ANCP die Informations-Nachricht MSG an den Diensteknoten SN [BRAS] und teilt diesem den neuen Portstatus einschließlich verschiedener weiterer Parameter mit, wie z.B. Bitraten usw.. Der Portstatuts betrifft die Schnittstelle PRT, über die das jeweilige Endgerät, also z.B. TEa, an den Zugangsknoten AN angeschlossen ist.

Eine Portstatus-Meldung (Port Status Message) kennzeichnet durch ein Informationsfeld den DSL Port (SLOT, Port, Rack usw.) und macht diesen dadurch adressierbar. Mit Übermittlung von vMAC Informationen ist dies auch auf einem MAC Layer möglich. Nach herkömmlicher Methode könnten an die Portstatus-Meldung weitere Parameter angefügt werden, welche dem Diensteknoten SN auch die Adressierung des Ports PRT auf niedrigeren Protokollschichten erlaubt (z.B. MAC-Adresse bei Ethernet). Jedoch erreicht üblicherweise diese Information den BRAS nicht, da zwischengeschaltete Netzelemente bzw. Knoten xN die tieferen Protokollschichten jeweils terminieren. Da die korrekte Adressierung des MEP auf den untersten Protokollschichten für die Funktion von Ethernet OAM jedoch essentiell ist, müsste diese Adresse jeweils administrativ, z. B. über ein EMS (Element Management System) bereitgestellt (provisioniert) werden.

Die hier vorgeschlagene Erfindung benutzt anstatt der manuellen Provisionierung hingegen den Steuerkanal CTRCH bzw. das ANCP Protokoll.

Zur Nutzung von standardisierten Ethernet OAM Funktionen (z. B. Loopback, Linktrace oder Continuity Check) zwischen Endgerät und BRAS ist die Kenntnis dieser Adresse am gegenüberliegenden MEP notwendig. Die Peer MAC Adresse kann dem MEP per Konfiguration mitgeteilt werden. Um diese Funktion in einem Massenmarktszenario nutzen zu können, ist eine automatische Übermittlung und Erkennung dieser MAC Adressen am MEP notwendig. Die vorliegende Erfindung setzt hier an und beschreibt eine Methode zur automatischen Erkennung und Übermittlung dieser Informationen.

Hervorzuheben ist, dass der Zugangsknoten AN diese Endpunkt-Adressen (eine oder alle) über eine Spontanmeldung (MSG) nach erfolgreicher DSL Synchronisierung und erlernter Endgeräte MAC Adresse an den BRAS schickt (s. Fig. 2b). Das kann über eine Statusmeldung von ANCP erfolgen, die als PORT-UP Nachricht im ANCP Protokoll bereits definiert ist und die zusätzliche Datenfelder ADR1 bis ADRn für die Endpunkt-Adressinformation bereithält.

Durch die Adressierung der virtuellen Netzwerk-Adressen vMACa bis vMACz im Zugangsknoten AN kann der Endpunkt im jeweiligen Endgerät allerdings nicht erreicht werden. Um den Endpunkt im Endgerät erreichen zu können, wird im Schritt 130 die erfindungsgemäße Umsetzungsfunktion bzw. Interworking-Funktion IWF durchgeführt.

Diese Funktion IWF prüft im Schritt 131, ob eine echte Adresse für den Endpunkt bekannt ist, z.B. die MACa, und ordnet diese in einem Schritt 132 der jeweiligen dem Dienstknoten SN bekannten Adresse, hier z.B. der virtuellen vMACa, zu. Ist keine echte Adresse bekannt oder ist eine bekannte Adresse bereits verfallen, so ordnet die. Interworking- Funktion IWF der bekannten Adresse vMACa eine Sammel-Adresse MAC* zu, wodurch sicher gestellt wird, dass die Nachricht, z.B. LBM, sicher an dem gewünschten Endpunkt TEa ankommt.

Ein weiterer Vorteil dieses Verfahrens liegt in der automatischen Integration einer evtl. vorhandenen Virtualisierung von Endpunktadressen (z.B. vMAC). Netzbetreiber werden aus Gründen der Eineindeutigkeit von Endpunktadressen sowie aus Sicherheitsüberlegungen heraus eine Funktion im AN einsetzen, welche die "echte" Endpunktadresse des Kundenendgeräts (z.B. MAC-Adresse) im AN durch virtuelle Endpunktadressen in Richtung Netz ersetzt. Bei einer manuellen Administration müsste diese Umsetzung mit berücksichtigt werden. Beim hier beschriebenen Verfahren erfolgt die Berücksichtigung dieses Umstandes automatisch durch den AN. Es sind keine weiteren Eingriffe erforderlich.

### Bezugszeichenliste

- TE: Endpunkt bzw. Teilnehmer-Endgerät
- AN: Zugangsknoten (Access Node)
- SN: Diensteknoten (Service Node)
- xN: weitere Netzknoten
- MACi: echte Netzwerk-Adressen (Media Access Control)
- vMACi: virtuelle Netzwerk-Adressen
- MEP, MIP: Endpunkt oder Zwischenpunkt bezüglich OAM-Funktion (Maintenance Entity Point bzw. Maintenance Intermediate Point)

- CTRCH: Steuerkanal
- ANCP: verwendetes Protokol (Access Node Control Protocol)
- OAM-MSG: Nachricht (OAM: Operation and Maintenance)
- ADR1, ADRn: Datenfelder für Adressdaten

- BRAS: Breitband-Zugangs-Knoten bzw. -Server (Broadband Remote Access Server
- IWF: Umsetzungs-Funktion bzw. Interworking Function
- LBM, LBR: Nachrichten bzgl. OAM-Funktionen (Loop Back Message bzw. Loop Back Report Message)

## Patentansprüche

1. Verfahren (100) zur Adressierung mindestens eines Endpunktes (TEa, ... TEz) in einem Netzwerk, das einen Zugangsknoten (AN) und einen damit verbindbaren Diensteknoten (SN) aufweist, der als Breitband-Zugangsknoten ausgebildet ist, wobei über mindestens eine als DSL-Port ausgebildete Schnittstelle des Zugangsknotens (AN) der Netzwerkzugang für den mindestens einen Endpunkt (TEa, ... TEz) hergestellt wird und der Zugangsknoten (AN) die echten MAC-Netzwerk-Adressen (MACa, ... MACx, MACy, MACz) der angeschlossenen Endpunkte (TEa, ... TEz) verwaltet, wobei über jeweils besagte eine Schnittstelle je ein Endpunkt (TEa) angeschlossen ist, und wobei zur Adressierung von Nachrichten für Betriebs- und Wartungszwecke, die zwischen dem Dienstknoten (SN) und dem jeweiligen Endpunkt (TEa) ausgetauscht werden, welche als Endpunkte (MEP) bezüglich einer Betriebs- und Wartungsfunktion dienen, folgende Schritte durchgeführt werden:
- von dem Zugangsknoten (AN) werden die echten Netzwerk-Adressen (MACa, ... MACx, MACy, MACz) der angeschlossenen Endpunkte (TEa, ... TEz) gespeichert, wobei auch solche Netzwerk-Adressen ermittelt und fortlaufend erneuert werden, die nur eine vorbestimmbare Gültigkeitsdauer aufweisen (110);
- von dem Zugangsknoten (AN) wird an den Diensteknoten (SN) über einen Steuerkanal im Rahmen eines Netzwerkprotokolls eine Informations-Nachricht (MSG) gesendet, die virtuelle Netzwerk-Adressen (vMACa, ...vMACx, vMACy, vMACz) angibt, die den an dem Zugangsknoten (AN) angeschlossenen Endpunkten (TEa, ... TEz) zugeordnet worden sind, um den Diensteknoten (SN) zu befähigen, besagte Nachrichten für Betriebs- und Wartungszwecke an den mindestens einen Endknoten (TEa) zu adressieren (120);
- von dem Zugangsknoten (AN) wird eine Umsetzungs-Funktion (IWF) durchgeführt, indem bei einer von dem Diensteknoten (SN) kommenden und an den jeweiligen Endpunkt (TEa) gerichteten Nachricht für Betriebs- und Wartungszwecke geprüft wird, ob für diesen Endpunkt (TEa) die echte Netzwerk-Adresse (MACa) in dem Zugangsknoten (AN) bekannt ist (131), wobei:
- in dem Zugangsknoten (AN) die virtuelle Netzwerk-Adresse (vMACa) durch die echte Netzwerk-Adresse (MACa) ersetzt wird und die Nachricht für Betriebs- und Wartungszwecke mittels der echten Netzwerk-Adresse (MACa) des Endknotens (TEa) über die besagte Schnittstelle weitergeleitet wird, falls diese echte Netzwerk-Adresse (MACa) bekannt ist (132); oder
- die eingehende Nachricht für Betriebs- und Wartungszwecke mittels einer Broadcast-Adresse (MAC*) über die besagte Schnittstelle weitergeleitet wird, falls die echte Netzwerk-Adresse des Endknotens (TEa) nicht bekannt ist oder die Gültigkeitsdauer der Netzwerk-Adresse abgelaufen ist; und
- von dem Endknoten (TEa), an den die Nachricht für Betriebs- und Wartungszwecke gerichtet ist, wird eine Antwort-Nachricht an den Diensteknoten (SN) gesendet, wobei der Zugangsknoten (AN) diese Antwort-Nachricht mittels einer dem Dienstknoten (SN) zugeordneten echten Netzwerk-Adresse (MACO) adressiert und weiterleitet (140).

2. Verfahren (100) nach Anspruch 1, wobei von dem Zugangsknoten (AN) an den Diensteknoten (SN) über den Steuerkanal eine den Portstatus der Schnittstelle betreffende Informations-Nachricht (MSG) gesendet wird (120), die die virtuellen Netzwerk-Adressen (vMACa, ... vMACx, vMACy, vMACz) angibt.

3. Verfahren (100) nach Anspruch 1 oder 2, wobei von dem Zugangsknoten (AN) die echten Netzwerk-Adressen als echte MAC-Netzwerk-Adressen (MACa, ... MACx, MACy, MACz) der angeschlossenen Endpunkte (TEa, ... TEz) verwaltet werden.

4. Verfahren (100) nach Anspruch 3, wobei von dem Zugangsknoten (AN) den echten MAC-Netzwerk-Adressen (MACa, ... MACx, MACy, MACz) der angeschlossenen Endpunkte (TEa, ... TEz) virtuelle MAC-Netzwerk-Adressen (vMACa, ... vMACx, vMACy, vMACz) zugeordnet werden.

5. Netzwerk mit einem Zugangsknoten (AN) und mit einem damit verbindbaren Diensteknoten (SN), das als Breitband-Zugangsknoten ausgebildet ist, wobei der Zugangsknoten (AN) mindestens eine als DSL-Port ausgebildete Schnittstelle zum Anschluss mindestens eines Endpunkts (TEa ... TEz) aufweist und die echten Netzwerk-Adressen (MACa, ... MACx, MACy, MACz) der angeschlossenen Endpunkte (TEa ... TEz) verwaltet, wobei über jeweils eine besagte Schnittstelle je ein Endpunkt (TEa) angeschlossen ist, und wobei zur Adressierung von Nachrichten für Betriebs- und Wartungszwecke, die zwischen dem Dienstknoten (SN) und dem jeweiligen Endpunkt (TEa) ausgetauscht werden, welche als Endpunkte (MEP) bezüglich einer Betriebs- und Wartungsfunktion dienen, der Zugangspunt (AN) beschaffen ist, folgende Schritte durchzuführen:
- der Zugangsknoten (AN) speichert die echten Netzwerk-Adressen (MACa, ... MACx, MACy, MACz) der angeschlossenen Endpunkte (TEa, ... TEz), wobei der Zugangsknoten (AN) auch solche Netzwerk-Adressen ermittelt und fortlaufend erneuert, die nur eine vorbestimmbare Gültigkeitsdauer aufweisen (110);
- der Zugangsknoten (AN) sendet an den Diensteknoten (SN) über einen Steuerkanal im Rahmen eines Netzwerkprotokolls eine Informations-Nachricht (MSG), die virtuelle Netzwerk-Adressen (vMACa, ...vMACx, vMACy, vMACz) angibt die den an dem Zugangsknoten (AN) angeschlossenen Endpunkten (TEa, ... TEz) zugeordnet worden sind, um den Diensteknöten (SN) zu befähigen, die Nachrichten für Betriebs- und Wartungszwecke an den mindestens einen Endknoten (TEa) zu adressieren (120);
- der Zugangsknoten (AN) führt eine Umsetzungs-Funktion (IWF) durch, indem bei einer von dem Diensteknoten (SN) kommenden und an den jeweiligen Endpunkt (TEa) gerichteten Nachricht für Betriebs- und Wartungszwecke geprüft wird, ob für diesen Endpunkt (TEa) die echte Netzwerk-Adresse (MACa) in dem Zugangsknoten (AN) bekannt ist (131), wobei:
- der Zugangsknoten (AN) die virtuelle Netzwerk-Adresse (vMACa) durch die echte Netzwerk-Adresse (MACa) ersetzt und die Nachricht für Betriebs- und Wartungszwecke mittels der echten Netzwerk-Adresse (MACa) des Endknotens (TEa) über die besagte Schnittstelle weiterleitet, falls diese echte Netzwerk-Adresse (MACa) bekannt ist (132); oder
- die eingehende Nachricht für Betriebs- und Wartungszwecke mittels einer Broadcast-Adresse (MAC*) über die besagte Schnittstelle weiterleitet, falls die echte Netzwerk-Adresse des Endknotens (TEa) nicht bekannt ist oder die Gültigkeitsdauer der Netzwerk-Adresse abgelaufen ist (133); und
- wenn von dem Endknoten (TEa), an den die Nachricht für Betriebs- und Wartungszwecke gerichtet ist eine Antwort-Nachricht an den Diensteknoten (SN) gesendet wird, der Zugangsknoten (AN) diese Antwort-Nachricht mittels einer dem Dienstknoten (SN) zugeordneten echten Netzwerk-Adresse (MACO) adressiert und weiterleitet (140).

6. Netzwerk nach Anspruch 5, wobei die angeschlossenen Endpunkte mehrere Teilnehmer-Endgeräte (TEa, ... TEz) und/oder Anschlussgeräte, insbesondere DSL-Modems, sind, die so beschaffen sind, dass sie über den Zugangsknoten (AN) mit dem Dienstknoten (SN) Nachrichten für Betriebs- und Wartungszwecke austauschen.

7. Netzwerk nach Anspruch 5 oder 6, wobei der Zugangsknoten (AN) ein Multiplexer-Demultiplexer, insbesondere eine DSL-Mux-Demux, ist.

8. Netzwerk nach einem der Ansprüche 5 bis 7, wobei das Netzwerk zumindest für die Betriebs- und Wartungszwecke als Ethernet aufgebaut ist.

9. Netzwerk nach Anspruch 8, wobei auf dem Steuerkanal die Informations-Nachricht (MSG) im Rahmen des Netzwerkprotokolls als "Port-Up-Nachricht" übermittelt wird.

10. Zugangsknoten (AN) für ein Netzwerk, das den Zugangsknoten (AN) und einen damit verbindbaren Diensteknoten (SN) aufweist, der als Breitband-Zugangsknoten ausgebildet ist, wobei der Zugangsknoten (AN) mindestens eine als DSL-Port ausgebildete Schnittstelle zum Anschluss mindestens eines Endpunkts (TEa ... TEz) aufweist und die echten Netzwerk-Adressen (MACa, ... MACx, MACy, MACz) der angeschlossenen Endpunkte (TEa ... TEz) verwaltet, wobei über jeweils eine besagte Schnittstelle je ein Endpunkt (TEa) angeschlossen ist, und wobei zur Adressierung von Nachrichten für Betriebs- und Wartungszwecke, die zwischen dem Dienstknoten (SN) und dem mindestens einem Endpunkt (TEa) ausgetauscht werden, welche als Endpunkte (MEP) bezüglich einer Betriebs- und Wartungsfunktion dienen, der Zugangspunt (AN) beschaffen ist, folgende Schritte durchzuführen:
- der Zugangsknoten (AN) speichert die echten Netzwerk-Adressen (MACa, ... MACx, MACy, MACz) der angeschlossenen Endpunkte (TEa, ... TEz), wobei der Zugangsknoten (AN) auch solche Netzwerk-Adressen ermittelt und fortlaufend erneuert, die nur eine vorbestimmbare Gültigkeitsdauer aufweisen (110);
- der Zugangsknoten (AN) sendet an den Diensteknoten (SN) über einen Steuerkanal im Rahmen eines Netzwerkprotokolls eine Informations-Nachricht (MSG), die virtuelle Netzwerk-Adressen (vMACa, ...vMACx, vMACy, vMACz) angibt, die den an dem Zugangsknoten (AN) angeschlossenen Endpunkten (TEa, ... TEz) zugeordnet worden sind, um den Diensteknoten (SN) zu befähigen, die Nachrichten für Betriebs- und Wartungszwecke, an den mindestens einen Endknoten (TEa) zu adressieren (120);
- der Zugangsknoten (AN) führt eine Umsetzungs-Funktion (IWF) durch, indem bei einer von dem Diensteknoten (SN) kommenden und an den jeweiligen Endpunkt (TEa) gerichteten Nachricht für Betriebs- und Wartungszwecke geprüft wird, ob für diesen Endpunkt (TEa) die echte Netzwerk-Adresse (MACa) in dem Zugangsknoten (AN) bekannt ist (131), wobei:
- der Zugangsknoten (AN) die virtuelle Netzwerk-Adresse (vMACa) durch die echte Netzwerk-Adresse (MACa) ersetzt und die Nachricht für Betriebs- und Wartungszwecke mittels der echten Netzwerk-Adresse (MACa) des Endknotens (TEa) über die besagte Schnittstelle weiterleitet, falls diese echte Netzwerk-Adresse (MACa) bekannt ist (132); oder
- die eingehende Nachricht für Betriebs- und Wartungszwecke mittels einer Broadcast-Adresse (MAC*) über die besagte Schnittstelle weiterleitet, falls die echte Netzwerk-Adresse des Endknotens (TEa) nicht bekannt ist öder die Gültigkeitsdauer der Netzwerk-Adresse abgelaufen ist (133); und
- wenn von dem Endknoten (TEa), an den die Nachricht für Betriebs- und Wartungszwecke gerichtet ist eine Antwort-Nachricht an den Diensteknoten (SN) gesendet wird, der Zugangsknoten (AN) diese Antwort-Nachricht mittels einer dem Dienstknoten (SN) zugeordneten echten Netzwerk-Adresse (MACO) adressiert und weiterleitet (140).

## Claims

1. Method (100) for addressing at least one end point (TEa,... TEz) in a network which has an access node (AN) and a service node (SN) being connectable thereto and being configured as a broadband access node, the network access being established for the at least one end point (TEa,... TEz) via at least one interface of the access node (AN) configured as a DSL port, and the access node (AN) managing the real MAC network addresses (MACa, .... TEz).... MACx, MACy, MACz) of the connected endpoints (TEa,... TEz), one endpoint (TEa) each being connected via one of said interfaces, and the following steps being carried out for addressing messages for operating and maintenance purposes which are exchanged between the service node (SN) and the respective endpoint (TEa) which serve as endpoints (MEP) with respect to an operating and maintenance function:
- the real network addresses (MACa, ... MACx, MACy, MACz) of the connected end points (TEa,... TEz) are stored by the access node (AN), wherein also those network addresses are determined and continuously renewed, which have only a predeterminable validity period (110);
- an information message (MSG) is sent from the access node (AN) to the service node (SN) via a control channel as part of a network protocol, the message indicting virtual network addresses (vMACa,...vMACx, vMACy, vMACz) assigned to the endpoints (TEa,... TEz) which are connected to the access node (AN) to enable the service node (SN) to address said message for operation and maintenance purposes to the at least one endpoint (TEa) (120);
- from the access node (AN), an interworking function (IWF) is performed by checking whether the real network address (MACa) is known in the access node (AN) for this end point (TEa) when a message for operational and maintenance purposes comes from the service node (SN) and is addressed to the respective end point (TEa) (131),
wherein:
- in the access node (AN) the virtual network address (vMACa) is replaced by the real network address (MACa) and the message for operational and maintenance purposes is forwarded by means of the real network address (MACa) via said interface, if this real network address (MACa) is known (132); or
- the incoming message for operational and maintenance purposes is forwarded by means of a broadcast address (MAC*) via said interface, if the real network address of the endpoint (TEa) is unknown or the validity period of the network address has expired; and
- from the endpoint (TEa) to which the message for operational and maintenance purposes is addressed, a response message is sent to the service node (SN), the access node (AN) addressing and forwarding this response message by means of a real network address (MACO) associated with the service node (SN) (140).

2. Method (100) according to claim 1, wherein an information message (MSG) concerning the port status of the interface is sent (120) from the access node (AN) to the service node (SN) via the control channel, which message specifies the virtual network addresses (vMACa,... vMACx, vMACy, vMACz).

3. Method (100) according to claim 1 or 2, wherein the real network addresses are managed by the access node (AN) as real MAC network addresses (MACa, ... MACx, MACy, MACz) of the connected endpoints (TEa,... TEz).

4. Method (100) according to claim 3, whereby virtual MAC network addresses (vMACa, ... vMACx, vMACy, vMACz) are assigned by the access node (AN) to the real MAC network addresses (MACa,... MACx, MACy, MACz) of the connected end points (TEa,... TEz).

5. Network having an access node (AN) and having a service node (SN) being connectable thereto and being configured as a broadband access node, wherein the access node (AN) has at least one interface configured as a DSL port for connecting at least one end point (TEa... TEz), and manages the real network addresses (MACa,... MACx, MACy, MACz) of the connected end points (TEa... TEz), one endpoint (TEa) each being connected via said interface, and the access point (AN) being arranged to perform the following steps for addressing messages for operational and maintenance purposes exchanged between the service node (SN) and the respective endpoint (TEa) which serve as endpoints (MEP) with respect to an operational and maintenance function:
- the access node (AN) stores the real network addresses (MACa,... MACx, MACy, MACz) of the connected end points (TEa,... TEz), wherein the access node (AN) also determines and continuously renews those network addresses which have only a predeterminable validity period (110);
- the access node (AN) sends an information message (MSG) to the service node (SN) via a control channel as part of a network protocol, the message indicating virtual network addresses (vMACa,...vMACx, vMACy, vMACz) assigned to the endpoints (TEa,... TEz) which are connected to the access node (AN) to enable the service node (SN) to address (120) the messages for operational and maintenance purposes to the at least one endpoint (TEa) (120);
- the access node (AN) performs an interworking function (IMF) by checking whether the real network address (MACa) is known in the access node (AN) for this end point (TEa) when a message for operational and maintenance purposes comes from the service node (SN) and is addressed to the respective end point (TEa) (131), wherein:
- the access node (AN) replaces the virtual network address (vMACa) by the real network address (MACa) and forwards the message for operational and maintenance purposes via said interface by means of the real network address (MACa) of the endpoint (TEa) if this real network address (MACa) is known (132); or
- forwards the incoming message for operational and maintenance purposes via said interface by means of a broadcast address (MAC*) if the real network address of the endpoint (TEa) is unknown or the validity period of the network address has expired (133); and
- when a response message is sent to the service node (SN) from the endpoint (TEa) to which the message for operational and maintenance purposes is addressed, the access node (AN) addresses and forwards this response message by means of a real network address (MACO) assigned to the service node (SN) (140).

6. Network according to claim 5, wherein the connected end points are several subscriber terminals (TEa,... TEz) and/or connection devices, in particular DSL modems, which are designed such that they exchange messages via the access node (AN) with the service node (SN) for operating and maintenance purposes.

7. Network according to claim 5 or 6, wherein the access node (AN) being a multiplexer-demultiplexer, in particular a DSL-Mux-Demux.

8. Network according to any of claims 5 to 7, wherein the network being constructed as Ethernet at least for operating and maintenance purposes.

9. Network according to claim 8, wherein the information message (MSG) is transmitted on the control channel as a "port-up message" within the framework of the network protocol.

10. Access node (AN) for a network comprising the access node (AN) and a service node (SN) being connectable thereto and being configured as a broadband access node, wherein the access node (AN) comprises at least one interface configured as a DSL port for connecting at least one end point (TEa... TEz) and manages the real network addresses (MACa,... MACx, MACy, MACz) of the connected end points (TEa... TEz), one endpoint (TEa) each being connected via said interface, and the access point (AN) being arranged to perform the following steps for addressing messages for operational and maintenance purposes which are exchanged between the service node (SN) and the at least one endpoint (TEa) which serve as endpoints (MEP) with respect to an operational and maintenance function:
- the access node (AN) stores the real network addresses (MACa,... MACx, MACy, MACz) of the connected end points (TEa,... TEz), wherein the access node (AN) also determines and continuously renews those network addresses which have only a predeterminable validity period (110);
- the access node (AN) sends an information message (MSG) to the service node (SN) via a control channel as part of a network protocol, the message indicating virtual network addresses (vMACa,...vMACx, vMACy, vMACz) assigned to the endpoints (TEa,... TEz) which are connected to the access node (AN) to enable the service node (SN) to address (120) the messages for operational and maintenance purposes to the at least one endpoint (TEa) (120);
- the access node (AN) performs an interworking function (IMF) by checking whether the real network address (MACa) in the access node (AN) is known for this end point (TEa) when a message for operational and maintenance purposes comes from the service node (SN) and is addressed to the respective end point (TEa) (131), wherein:
- the access node (AN) replaces the virtual network address (vMACa) by the real network address (MACa) and forwards the message for operational and maintenance purposes via said interface by means of the real network address (MACa) of the endpoint (TEa) if this real network address (MACa) is known (132); or
- forwards the incoming message for operational and maintenance purposes via said interface by means of a broadcast address (MAC*) if the real network address of the endpoint (TEa) is unknown or the validity period of the network address has expired (133); and
- when a response message is sent to the service node (SN) from the endpoint (TEa) to which the message for operational and maintenance purposes is addressed, the access node (AN) addresses and forwards this response message by means of a real network address (MACO) assigned to the service node (SN) (140).

## Revendications

1. Un procédé (100) d'adressage d'au moins un point terminal (TEa, ... TEz) au sein d'un réseau comprenant un noeud d'accès (AN) et un noeud de service (SN) connectable qui lui est connectable, et qui est configuré en tant que noeud d'accès à large bande, l'accès réseau étant établi pour le point terminal au moins (TEa, ... TEz) via au moins une interface du noeud d'accès (AN) configurée en tant que port DSL, et le noeud d'accès (AN) gérant les adresses réseau MAC réelles (MACa, ... MACx, MACy, MACz) des points terminaux connectés (TEa, ... TEz), chaque point terminal (TEa) étant connecté via l'une desdites interfaces, et les étapes suivantes étant exécutées pour adresser des messages à finalité opérationnelle et de maintenance échangés entre le noeud de service (SN) et le point terminal respectif (TEa) servant de points terminaux (MEP) par rapport au fonctionnement et à la fonction de maintenance ;
- les adresses réseau réelles (MACa, ... MACx, MACy, MACz) des points terminaux connectés (TEa, ... TEz) sont stockées par le noeud d'accès (AN), dans lequel ces adresses réseau sont également déterminées et constamment renouvelées, qui présentent une durée de validité prédéterminable (110) ;
- un message d'information (MSG) est transmis au noeud de service (SN) depuis le noeud d'accès (AN) via un canal de commande qui est partie du protocole réseau, les adresses réseau virtuelles indiquées dans le message (vMACa, ..., vMACx, vMACy, vMACz) assignées aux points terminaux (TEa, ... TEz) qui sont connectés au noeud d'accès (AN) pour permettre au noeud de service (SN) d'adresser ledit message à finalité opérationnelle et de maintenance vers ledit point terminal au moins (TEa) (120) ;
- une fonction d'interopérabilité (IWF) est effectuée depuis le noeud d'accès (AN) en vérifiant si l'adresse réseau réelle (MACa) est connue dans le noeud d'accès (AN) pour ce point terminal (TEa) lorsqu'un message à finalité opérationnelle et de maintenance arrive depuis le noeud de service (SN) et est adressé au point terminal respectif (TEa) (131),
dans lequel
- On replace l'adresse réseau virtuelle (vMACa) dans le noeud d'accès (AN) par l'adresse réseau réelle (MACa) et l'on transfère le message à finalité opérationnelle et de maintenance via ladite interface au moyen de l'adresse réseau réelle (MACa), si l'adresse de réseau réelle (MACa) est connue (132) ; ou
- le message arrivant à des fins de fonctionnement et de maintenance est transféré au moyen d'une adresse de diffusion large (MAC*) via ladite interface, si l'adresse réseau réelle du point terminal (TEa) n'est pas connue ou lorsque la période de validité de l'adresse réseau a expiré ; et
- on transmet un message de réponse, depuis le point terminal (TEa) auquel le message à finalité opérationnelle et de fonctionnement est destiné, vers le noeud de service (SN), le noeud d'accès (AN) adressant et faisant suivre ce message de réponse au moyens de l'adresse réseau réelle (MACO) associée au noeud de service (SN) (140).

2. Le procédé (100) selon la revendication 1, dans lequel on envoie un message de d'information (MSG) concernant l'état du port de l'interface (120) depuis le noeud d'accès (AN) vers le noeud de service (SN) via le canal de commande, lequel message spécifie les adresses réseau virtuelles (vMACa, ... vMACx, vMACy, vMACz).

3. Le procédé (100) selon la revendication 1 ou 2, **caractérisé en ce que** les adresses réseau réelles sont gérées par le noeud d'accès (AN) en tant qu'adresses réseau MAC réelle (MACa, ... MACx, MACy, MACz) des points terminaux connectés (TEa, ... TEz).

4. Le procédé (100) selon la revendication 3, **caractérisé en ce que** les adresses de réseau MAC virtuelles (MACa, ... MACx, MACy, MACz) sont affectées par le noeud d'accès (AN) aux adresses réseau MAC réelles (MACa, ... MACx, MACy, MACz) des points terminaux connectés (TEa, ... TEz).

5. Un réseau ayant un noeud d'accès (AN) et ayant un noeud de service (SN) connectable à celui-ci et étant configuré en tant que noeud d'accès à large bande, dans lequel le noeud d'accès (AN) présent au moins une interface configuré en tant que port DSL pour connecter au moins un point terminal (TEa... TEz), et gérant les adresses réseaux réelles (MACa, ... MACx, MACy, MACz) des points terminaux connectés (TEa, ... TEz), chaque point terminal (TEa) étant connecté via ladite interface, et le point d'accès (AN) étant disposé pour effectuer les étapes suivantes pour adresser des messages à des fins de fonctionnement et de maintenance échangés entre le noeud de service (SN) et le point terminal respectif (TEa) servant de points terminaux (MEP) par rapport au fonctionnement et à la maintenance :
- le noeud d'accès (AN) stocke les adresses réseau réelles (MACa, ... MACx, MACy, MACz) des points terminaux connectés (TEa, ... TEz), dans lequel le noeud d'accès détermine également et renouvelle constamment ces adresses réseau qui présentent une durée de validité prédéterminable (110) ;
- le noeud d'accès (AN) transmet un message d'information (MSG) au noeud de service (SN) via un canal de commande qui est partie du protocole réseau, les adresses réseau virtuelles indiquées dans le message (vMACa, ..., vMACx, vMACy, vMACz) assignées aux points terminaux (TEa, ... TEz) qui sont connectée au noeud d'accès (AN) pour permettre au noeud de service d'adresser ledit message à des fins de fonctionnement et de maintenance vers ledit point terminal au moins (TEa) (120) ;
- le noeud d'accès (AN) effectue une fonction d'interopérabilité (IMF) en vérifiant si l'adresse réseau réelle (MACa) est connue dans le noeud d'accès (AN) pour ce point terminal (TEa) lorsqu'un message de fonctionnement et de maintenance arrive du noeud de service (SN) et est adressé au point terminal respectif (TEa) (131), dans lequel :
- le noeud d'accès (AN) remplace l'adresse réseau virtuelle (vMACa) par l'adresse réseau réelle (MACa) et fait suivre le message de fonctionnement et de maintenance via la dite interface au moyen de l'adresse réseau réelle (MACa) du point terminal (TEa) si l'adresse de réseau réelle (MACa) est connue (132) ; ou
- fait suivre le message de fonctionnement et de maintenance arrivant via ladite interface au moyen d'une adresse de diffusion (MAC*) si l'adresse réseau réelle du point terminal (TEa) n'est pas connue ou lorsque la période de validité de l'adresse réseau a expiré ; et
- lorsqu'un message de réponse est transmis au noeud de service (SN) depuis le point terminal (TEa) auquel le message de fonctionnement et de maintenance et adressé, le noeud d'accès (AN) adresse et fait suivre ce message de réponse au moyen d'une adresse réseau réelle (MACO) associée au noeud de service (SN) (140).

6. Le réseau selon la revendication 5, dans lequel les points terminaux sont plusieurs terminaux d'abonnés (TEa, ... TEz) et/ou des dispositifs de connexion, en particulier des modems DSL, qui sont concus de telle façon à échanger des messages via le noeud d'accès (AN) avec le noeud de service (SN) pour des finalités de fonctionnement et de maintenance.

7. Le réseau selon la revendication 5 ou 6, dans lequel le noeud d'accès (AN) est un multiplexeur, démultiplexeur, en particulier un multiplexeur/démultiplexeur DSL.

8. Le réseau selon l'une quelconque des revendications 5 à 7, dans lequel le réseau est construit sous forme de réseau Ethernet au moins à des finalités de fonctionnement et de maintenance.

9. Le réseau selon la revendication 8, dans lequel le message d'information (MSG) est transmis sur le canal de commande en tant que message « port-up » à l'intérieure du cadre du protocole de réseau.

10. Un noeud d'accès (AN) pour un réseau comprenant un noeud d'accès (AN) et un noeud de service (SN) connectable à celui-ci et étant configuré en tant que noeud d'accès à large bande, dans lequel le noeud d'accès (AN) comporte au moins une une interface configurée en tant que port DSL pour connecter au moins un point terminal (Eta... TEz) et gère les adresses réseau réelles (MACa, ... MACx, MACy, MACz) des points terminaux connectés (TEa, ... TEz), chaque point terminal (TEa) étant connecté via ladite interface, et le point d'accès (AN) étant disposé pour effectuer les étapes suivantes pour adresser des messages à finalité opération et de maintenance qui sont échangés entre le noeud de service (SN) et le point terminal au moins (TEa) servant de points terminaux (MEP) par rapport aux fonctions opérationnelles et de maintenance ;
- le noeud d'accès (AN) stocke les adresses réseau réelles (MACa, ... MACx, MACy, MACz) des points terminaux connectés (TEa, ... TEz), dans lequel le noeud d'accès (AN) détermine également et renouvelle constamment ces adresses réseau qui présentent une durée de validité prédéterminable (110) ;
- le noeud d'accès (AN) envoie un message d'information (MSG) au noeud de service (SN) via un canal de commande qui est partie du protocole réseau, les adresses réseau virtuelles indiquées dans le message (vMACa, ..., vMACx, vMACy, vMACz) assignées aux points terminaux (TEa, ... TEz) qui sont connectés au noeud d'accès (AN) pour permettre au noeud de service (SN) d'adresser ledit message à finalité opérationnelle et de maintenance vers ledit point terminal au moins (TEa) (120) ;
- le noeud d'accès (AN) effectue une fonction d'interopération (IMF) en vérifiant si l'adresse réseau réelle (MACa) dans le noeud d'accès (AN) est connue pour ce point terminal (TEa) lorsqu'un message à finalité opération et de maintenance arrive du noeud de service (SN) et est adressé au point terminal respective (TEa) (131), dans lequel :
- le noeud d'accès (AN) remplace l'adresse réseau virtuelle (vMACa) par l'adresse réseau réelle (MACa) et transfère via ladite interface le message à finalité opérationnelle et de maintenance au moyen de l'adresse réseau réelle (MACa), si cette adresse de réseau réelle (MACa) est connue (132) ; ou
- fait suivre le message à finalité opérationnelle et de maintenance arrivant via la dite interface au moyen d'une adresse de diffusion large (MAC*), si l'adresse réseau réelle du point terminal (TEa) n'est pas connue ou lorsque la période de validité de l'adresse réseau a expiré ; et
- lorsqu'une message de réponse est transmis au noeud de service (SN) depuis le point terminal (TEa) auquel est adressé le message à finalité opérationnelle et de maintenance, le noeud d'accès (AN) adresse et fait suivre ce message de réponse au moyen de l'adresse réseau réelle (MACO) assignée au noeud de service (SN) (140).
